# EUROPEAN PATENT APPLICATION

(11) **EP 4 170 927 A1**
(43) Date of publication of application: **26.04.2023**
(21) Application number: 21203821.0
(22) Date of filing: 20.10.2021
(51) Int. Cl.: H04B 7/185, H04W 16/32

(54) **NON-TERRESTRIAL NETWORK**

(71) Applicant: Nokia Technologies Oy, 02610 Espoo (FI)
(72) Inventor: MEDEIROS DE AMORIM, Rafhael, 9000 Aalborg (DK); FREDERIKSEN, Frank, 9270 Klarup (DK)
(74) Representative: Script IP Limited

(57) **Abstract**

An apparatus, comprising: means for receiving configured to acquire non-terrestrial network connection assistance information related to non-terrestrial network entities providing non-terrestrial network cells providing coverage to the apparatus; and means for transmitting configured to transmit at least the non-terrestrial network connection assistance information to user equipment within transmission range of the means for transmitting.

## Description

### TECHNOLOGICAL FIELD

Various example embodiments relate to apparatus and methods for a non-terrestrial network.

### BACKGROUND

In non-terrestrial networks, cells are provided typically by orbiting satellites and user equipment connect to cells as they provide coverage in the vicinity of the user equipment. Although such non-terrestrial networks provide for improved coverage, particular in remote areas, they have unexpected consequences. Accordingly, it is desired to provide improved techniques for non-terrestrial networks.

### BRIEF SUMMARY

The scope of protection sought for various embodiments of the invention is set out by the independent claims. The example embodiments and features, if any, described in this specification that do not fall under the scope of the independent claims are to be interpreted as examples useful for understanding various embodiments of the invention.

According to various, but not necessarily all, example embodiments of the invention there is provided according to a first aspect an apparatus, comprising: means for receiving configured to receive non-terrestrial network connection assistance information related to non-terrestrial network entities providing non-terrestrial network cells providing coverage to an apparatus; and means for transmitting configured to transmit at least the non-terrestrial network connection assistance information to user equipment within transmission range of the apparatus.

The non-terrestrial network connection assistance information may comprise an indication of a geographical location of the apparatus.

The means for receiving may be configured to receive global navigation satellite system transmissions and to derive the indication of the geographical location of the apparatus from the global navigation satellite system transmissions.

The non-terrestrial network connection assistance information may comprise non-terrestrial network entity information.

The means for receiving may be configured to receive non-terrestrial network entity transmissions and to derive the non-terrestrial network entity information from the non-terrestrial network entity transmissions.

The non-terrestrial network entity information may comprise at least one of: an indication of radio characteristics, a doppler shift, a transmission round-trip time, ephemeris information, a position, a trajectory and a velocity of the non-terrestrial network entities.

The radio characteristics may comprise at least one of: a physical cell identity, a radio frequency and a system reference timing of the non-terrestrial network cells.

The means for receiving may be configured to associate a time indicator with the non-terrestrial network entity information and to perform one of: updating the non-terrestrial network entity information based on time elapsed; and including the time indicator with the non-terrestrial network connection assistance information.

The means for transmitting may be configured to transmit the non-terrestrial network connection assistance information wirelessly to user equipment within wireless transmission range of the means for transmitting.

The means for transmitting may be configured to transmit the non-terrestrial network connection assistance information using at least one of: 3GPP; and non-3GPP radio access technologies.

The means for transmitting may be configured to transmit the non-terrestrial network connection assistance information with a transmission range which is less than that of a macro base station.

The means for transmitting may be configured to transmit the non-terrestrial network connection assistance information with a transmission range which is less than around 300 metres and preferably less than around 100 metres.

The apparatus may comprise distance estimator means configured to estimate a distance of the user equipment from the apparatus based on transmissions received from the user equipment.

The means for transmitting may be configured to provide an indication to the user equipment that no non-terrestrial network connection assistance information is to be provided when the user equipment is estimated to be greater than a threshold distance from the apparatus.

The means for transmitting may be configured to establish a cell with reduced functionality compared to that of a fully 3GPP-compliant base station.

The apparatus may lack circuitry configured to support backhaul communication with a core network.

The means for transmitting may be configured to provide an indication to the user equipment that the apparatus is unsuitable for supporting a radio resource control connected mode with the user equipment.

The indication may be one of an implicit and an explicit indication.

The means for transmitting may be configured to provide an indication to the user equipment that the apparatus is solely configured to provide the non-terrestrial network connection assistance information.

The means for transmitting may be configured to transmit a master information block and only a subset of system information blocks used to convey the non-terrestrial network connection assistance information.

The means for transmitting may be configured to transmit ephemeris information relating to the apparatus on an associated system information block.

The means for transmitting may be configured to transmit position and velocity information relating to the apparatus on an associated system information block used for conveying ephemeris information of the non-terrestrial network entities.

The means for transmitting may be configured to transmit the non-terrestrial network connection assistance information on an associated system information block.

The means for transmitting may be configured to establish a cell having a physical cell identifier which differs to any of the non-terrestrial network cells providing coverage to the apparatus.

The apparatus may comprise a base station.

According to various, but not necessarily all, embodiments of the invention there is provided according to a second aspect a method, comprising: receiving non-terrestrial network connection assistance information related to non-terrestrial network entities providing non-terrestrial network cells providing coverage to an apparatus; and transmitting at least the non-terrestrial network connection assistance information to user equipment within transmission range of the apparatus.

The non-terrestrial network connection assistance information may comprise an indication of a geographical location of the apparatus.

The method may comprise receiving global navigation satellite system transmissions and deriving the indication of the geographical location of the apparatus from the global navigation satellite system transmissions.

The non-terrestrial network connection assistance information may comprise non-terrestrial network entity information.

The method may comprise receiving non-terrestrial network entity transmissions and deriving the non-terrestrial network entity information from the non-terrestrial network entity transmissions.

The non-terrestrial network entity information may comprise at least one of an indication of: radio characteristics, a doppler shift, a transmission round-trip time, ephemeris information, a position, a trajectory and a velocity of the non-terrestrial network entities.

The radio characteristics may comprise at least one of: a physical cell identity, a radio frequency and system reference timing of the non-terrestrial network cells.

The method may comprise associating a time indicator with the non-terrestrial network entity information and performing one of: updating the non-terrestrial network entity information based on time elapsed; and including the time indicator with the non-terrestrial network connection assistance information.

The method may comprise transmitting the non-terrestrial network connection assistance information wirelessly to user equipment within wireless transmission range.

The method may comprise transmitting the non-terrestrial network connection assistance information using at least one of: 3GPP; and non-3GPP radio access technologies.

The method may comprise transmitting the non-terrestrial network connection assistance information with a transmission range which is less than that of a macro base station.

The method may comprise transmitting the non-terrestrial network connection assistance information with a transmission range which is less than around 300 metres and preferably less than around 100 metres.

The method may comprise estimating a distance of the user equipment from the apparatus based on transmissions received from the user equipment.

The method may comprise providing an indication to the user equipment that no non-terrestrial network connection assistance information is to be provided when the user equipment is estimated to be greater than a threshold distance from the apparatus.

The method may comprise establishing a cell with reduced functionality compared to that of a fully 3GPP-compliant base station.

The method may comprise providing an indication to the user equipment that the apparatus is unsuitable for supporting a radio resource control connected mode with the user equipment.

The indication may be one of an implicit and an explicit indication.

The method may comprise providing an indication to the user equipment that the apparatus is solely configured to provide the non-terrestrial network connection assistance information.

The method may comprise transmitting a master information block and only a subset of system information blocks used to convey the non-terrestrial network connection assistance information.

The method may comprise transmitting ephemeris information relating to the apparatus on an associated system information block.

The method may comprise transmitting position and velocity information relating to the apparatus on an associated system information block used for conveying ephemeris information of the non-terrestrial network entities.

The method may comprise transmitting the non-terrestrial network connection assistance information on an associated system information block.

The method may comprise establishing a cell having a physical cell identifier which differs to any of the non-terrestrial network cells providing coverage to the apparatus.

According to various, but not necessarily all, embodiments of the invention there is provided according to a third aspect an apparatus, comprising: means for receiving configured to receive non-terrestrial network connection assistance information from a base station and to determine from the non-terrestrial network connection assistance information that the base station has reduced functionality compared to that of a fully 3GPP compliant base station.

The fully 3GPP compliant base station may be a conventional or a traditional base station. The conventional or a traditional base station maybe one supporting a backhaul with a core network.

The apparatus may comprise means for transmitting configured to utilise the non-terrestrial network connection assistance information for connecting to a non-terrestrial network.

The means for transmitting may be configured to utilise the non-terrestrial network connection assistance information for connecting to another base station.

The non-terrestrial network connection assistance information may comprise an indication of a geographical location of the base station.

The non-terrestrial network connection assistance information may comprise non-terrestrial network entity information.

The non-terrestrial network entity information may comprise at least one of an indication of: radio characteristics, a doppler shift, a transmission round-trip time, ephemeris information, a position, a trajectory and a velocity of the non-terrestrial network entities.

The radio characteristics may comprise at least one of: a physical cell identity, a radio frequency and a system reference timing of the non-terrestrial network cells.

The non-terrestrial network connection assistance information may include a time indicator indicating an age of the non-terrestrial network connection assistance information.

The means for receiving maybe configured to adjust the non-terrestrial network connection assistance information based on the time indicator.

The means for receiving may be configured to receive the non-terrestrial network connection assistance information using at least one of: 3GPP; and non-3GPP compliant radio access technologies.

The apparatus may comprise distance estimator means configured to estimate a distance of the user equipment from the base station based on transmissions received from the base station.

The means for receiving may be configured to identify an indication that no non-terrestrial network connection assistance information is to be provided when the user equipment is estimated to be greater than a threshold distance from the apparatus.

The means for receiving may be configured to validate the non-terrestrial network connection assistance information based on the distance of the user equipment from the base station.

The means for receiving may be configured determine that a cell established by the base station has reduced functionality compared to that of a macro base station.

The means for receiving may be configured to determine that the base station is unconnected to a core network.

The means for receiving may be configured to identify an indication that the base station is unsuitable for supporting a radio resource control connected mode with the user equipment.

The indication may be one of an implicit and an explicit indication.

The means for receiving may be configured to identify an indication that the base station is solely configured to provide the non-terrestrial network connection assistance information.

The means for receiving may be configured to identify that it should receive a master information block and only a subset of system information blocks used to convey the non-terrestrial network connection assistance information.

The means for receiving may be configured to receive ephemeris information relating to the base station on an associated system information block.

The means for receiving may be configured to receive position and velocity information relating to the base station on an associated system information block used form conveying ephemeris information of the non-terrestrial network entities.

The means for receiving may be configured to receive the non-terrestrial network connection assistance information on an associated system information block.

The apparatus may comprise user equipment.

According to various, but not necessarily all, embodiments of the invention there is provided according to a fourth aspect a method, comprising: receiving non-terrestrial network connection assistance information from a base station and determining from the non-terrestrial network connection assistance information that the base station has reduced functionality compared to that of a fully 3GPP compliant base station.

The fully 3GPP compliant base station may be a conventional or a traditional base station. The conventional or a traditional base station may be one supporting a backhaul with a core network.

The method may comprise utilising the non-terrestrial network connection assistance information for connecting to a non-terrestrial network.

The method may comprise utilising the non-terrestrial network connection assistance information for connecting to another base station.

The non-terrestrial network connection assistance information may comprise an indication of a geographical location of the base station.

The non-terrestrial network connection assistance information may comprise non-terrestrial network entity information.

The non-terrestrial network entity information may comprise at least one of an indication of: radio characteristics, a doppler shift, a transmission round-trip time, ephemeris information, a position, a trajectory and a velocity of the non-terrestrial network entities.

The radio characteristics comprise at least one of: a physical cell identity, a radio frequency and a system reference timing of the non-terrestrial network cells.

The non-terrestrial network connection assistance information may include a time indicator indicating an age of the non-terrestrial network connection assistance information.

The method may comprise adjusting the non-terrestrial network connection assistance information based on the time indicator.

The method may comprise receiving the non-terrestrial network connection assistance information using at least one of: 3GPP; and non-3GPP compliant radio access technologies.

The method may comprise estimating a distance of the user equipment from the base station based on transmissions received from the base station.

The method may comprise identifying an indication that no non-terrestrial network connection assistance information is to be provided when the user equipment is estimated to be greater than a threshold distance from the apparatus.

The method may comprise validating the non-terrestrial network connection assistance information based on the distance of the user equipment from the base station.

The method may comprise determining that a cell established by the base station has reduced functionality compared to that of a macro base station.

The method may comprise determining that the base station is unconnected to a core network.

The method may comprise identifying an indication that the base station is unsuitable for supporting a radio resource control connected mode with the user equipment.

The indication may be one of an implicit and an explicit indication.

The method may comprise identifying an indication that the base station is solely configured to provide the non-terrestrial network connection assistance information.

The method may comprise identifying that a master information block and only a subset of system information blocks used to convey the non-terrestrial network connection assistance information should be received.

The method may comprise receiving ephemeris information relating to the base station on an associated system information block.

The method may comprise receiving position and velocity information relating to the base station on an associated system information block used form conveying ephemeris information of the non-terrestrial network entities.

The method may comprise receiving the non-terrestrial network connection assistance information on an associated system information block.

According to various, but not necessarily all, example embodiments of the invention there is provided according to a fifth aspect an apparatus according to the first or third aspects and their example embodiments set out above wherein the means comprise: at least one processor; and at least one memory including computer program code, the at least one memory and computer program code being configured to, with the at least one processor, cause the performance of the apparatus.

According to various, but not necessarily all, example embodiments of the invention there is provided according to a sixth aspect a computer program which when executed by a processor on an apparatus is configured to control the apparatus to perform a method according to the second or fourth aspects and their example embodiments set out above.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION

Some example embodiments will now be described with reference to the accompanying drawings in which:

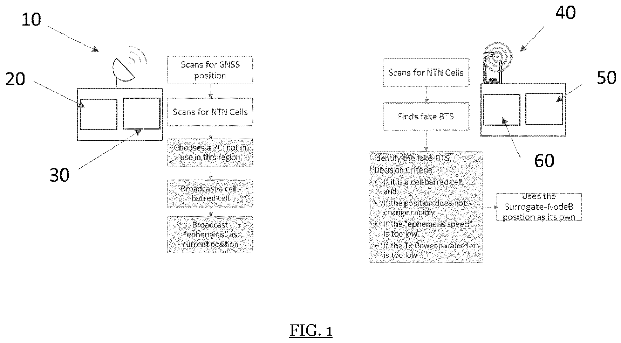

FIG. 1 illustrates an example embodiment of the subject matter described herein.

### DETAILED DESCRIPTION

Before discussing the example embodiments in any more detail, first an overview will be provided. Some example embodiments provide an arrangement whereby a base station is provided which assists user equipment to identify their position in order to assist that user equipment in connecting to a non-terrestrial network. Providing that information to the user equipment helps to reduce the power that would otherwise be required to be consumed by the user required to determine its position to enable that user equipment to connect to non-terrestrial network entities providing non-terrestrial network cells which provide coverage in its vicinity. The base station is typically disconnected from a core network and may even not have the functionality to even connect to the core network. Instead, the purpose of the base station is to determine its own position and set up a cell with a range which is typically much lower than that of a conventional base station in order to provide the positioning information to user equipment within range of a transmitter of the base station to assist them in connecting to the non-terrestrial network. This enables the user equipment to acquire this information very quickly, which minimizes power consumption and thus extends the life of user equipment with a limited or finite power supply. In particular, some user equipment are affected by the fact that its Global Navigation Satellite System (GNSS) and its cellular modem typically share radio frequency chain components. Therefore, acquiring a GNSS position means that the user equipment is unavailable for reading 5G New Radio (NR) signals transmitted over the non-terrestrial network. This therefore increases the time that the user equipment needs to be active to both locate its position and connect to the non-terrestrial network.

Example embodiments recognise that non-terrestrial networks are expected to serve remote and underserved areas, among other applications. Hence, user equipment may be located in energy-constrained locations. This makes the inefficient usage of user equipment power a serious problem to be addressed. Moreover, there are several scenarios, most importantly internet-of-things (IoT) over non-terrestrial networks, where many low-cost user equipment maybe in a given geographical area (a container ship, a network of sensors in a jungle/island, etc.), each of which need to determine their individual positions which collectively results in a large and unnecessary power consumption. Turning on the GNSS radio frequency circuitry for acquiring the user equipment position frequently may lead to waste of power considering that a user equipment waking up from deep sleep state may take several seconds before acquiring its position.

Accordingly, some example embodiments provide a technique that reduces the power consumption of the user equipment when performing positioning for connecting to the non-terrestrial network. In some example embodiments, this is achieved by providing a very low power transmitter device such as a so-called "surrogate nodeB" which broadcasts non-terrestrial network related cell information. This cell, a non-terrestrial network surrogate cell, is barred from user equipment connection, but typically transmits the master information block and system information block signals. In the system information blocks, the surrogate cell will provide its location, in the same manner as a non-terrestrial network cell provides the satellite location. The user equipment in turn, by reading the combination of parameters of the surrogate cell, deduces that the cell belongs to a surrogate nodeB and uses the surrogate nodeB position estimation as its own, knowing both the user equipment and the surrogate nodeB are both in close proximity due to the very low power transmission of the surrogate nodeB.

It will be appreciated that this approach can be used for user equipment to assist in positioning when the GNSS is not available or where hardware malfunctioning prevents GNSS positioning. This approach can also be used to refine the position of user equipment which have GNSS positioning. This approach can also be used to support intra non-terrestrial network positioning algorithms. This approach is advantageous, as the positioning is only performed when the user equipment is scanning for signals and does not require switching the RF chain, not waiting on GNSS estimation particularly under cold start conditions. This approach is beneficial as it can be used to assist low power devices under sparse non-terrestrial network coverage.

### Surrogate NodeB

FIG. 1 illustrates the operation of the surrogate node B and the user equipment according to one example embodiment. The surrogate nodeB 10 has circuitry including a transmitter 20 and a receiver 30 (other circuitry has been omitted to improve clarity). It will be appreciated that in other example embodiments a combined transceiver may be provided. The user equipment 40 also has circuitry including a transmitter 50 and a receiver 60 (other circuitry has been omitted to improve clarity). It will be appreciated that in other example embodiments a combined transceiver may be provided. The surrogate nodeB 10 typically has reduced functionality compared to a normal or traditional terrestrial network base station and may only be provided with the functionality to provide the non-terrestrial network connection assistance information. Typically, the surrogate nodeB 10 is not connected to any core network backhaul.

On initialization and then periodically, the surrogate nodeB 10 scans for the GNSS and locates its position. Typically, it performs this operation with high-fidelity GNSS receivers in the receiver 30 and possibly with augmented systems to provide for a refined position or even using multiple GNSS systems. Typically, there is no power limitation on this device as the surrogate nodeB 10 has a replenishing power source. In some example embodiments, the surrogate nodeB 10 also supports other means for estimating its geographical location and for monitoring the stability of its position. For example, one or more accelerometers, gyroscopes and/or compasses maybe provided. Hence, accurate positioning of the geographical location of the surrogate nodeB 10 is determined.

In some example embodiments, the surrogate nodeB 10 uses the receiver 30 to also scan for non-terrestrial network cells. This scanning serves two purposes. First, where the surrogate nodeB 10 performs in-band transmissions, it can use the information acquired to choose a physical cell identifier for the surrogate cell which is not in use by any other cells. Also, it can use the information relating to the non-terrestrial network cells to provide the ephemeris content of neighbour satellites in the system information block, providing more information to the user equipment about the availability of non-terrestrial network cells, particularly when experiencing sparse coverage. The surrogate nodeB 10 may then determine one or more of radio characteristics (including a physical cell identity, a frequency and system reference timing of the non-terrestrial network cells), a doppler shift, a transmission round-trip time, ephemeris information, a position, a trajectory and a velocity of said non-terrestrial network entities providing the non-terrestrial network cells. An age can be associated with this information to enable this age to either be conveyed to the user equipment 40 or to enable this information to be updated dynamically by the surrogate nodeB 10.

The surrogate nodeB 10 can then broadcast a surrogate cell using the transmitter 20. Typically, the surrogate cell is configured to have one or more of the following characteristics. It bars access for all the user equipment. That is to say, the user equipment cannot achieve a Radio Resource Control (RRC) connected mode with the surrogate nodeB 10. The surrogate nodeB 10 only broadcasts the mater information block (MIB) and the essential system information blocks (SIBs). In the corresponding SIB, the surrogate nodeB 10 broadcasts ephemeris information for the neighbour constellation of satellites. In the corresponding SIB, the surrogate nodeB 10 broadcasts the ephemeris information of the surrogate nodeB, i.e. its actual position and velocity.

The transmitter 20 transmits with very low power (typically giving a range of less than around 300 metres, preferably less than around 100 metres and preferably up to 50 metres). Depending on implementation, the transmissions maybe within inband or within an unlicensed band. In other example embodiments, the surrogate nodeB 10 broadcasts to user equipment 40 using a non-3GPP radio access technology such as bluetooth or WiFi.

In some example embodiments, the surrogate nodeB 10 determines from transmissions from the user equipment received by the receiver 30 that that user equipment is located too far from the surrogate nodeB 10 and the surrogate nodeB 10 in that situation fails to provide the assistance information to that user equipment or indicates to the user equipment that the assistance information is unreliable. The surrogate nodeB 10 can typically estimate the distance in two ways, either from the reception timing or another approach is that the user equipment 40 provides some control information which tells a time offset that the user equipment 40 would be applying for having a connection ( similar to reporting the applied timing advance in case there is a radio link between the two containing physical layer exchange of messages - or MAC (medium access control) or RLC (radio link control) layer messages).

### User Equipment

Upon wake-up, the user equipment 40 first scans for non-terrestrial network cells using the receiver 60. The user equipment 40 can do this without first needing to scan for its position using the GNSS. The user equipment 40 identifies the cell established by the surrogate nodeB 10. The user equipment 40 determines that the cell is established by the surrogate nodeB 10. The user equipment 40 is able to make that determination using for example one or more of the following: a barred call status associated with the cell, explicit signalling provided by the surrogate nodeB 10, the absence of one or more SIBs, the positioning information provided for the surrogate nodeB 10 which indicates that it is on the surface of the earth, the velocity information provided by the surrogate nodeB 10 in the ephemeris information being too low and not comparable with the magnitude of low earth orbit satellite velocities, the transmission power information of the surrogate nodeB 10 being significantly lower than what is expected from other nodeBs.

The position information provided by the surrogate nodeB 10 can then be used by the user equipment 40 as its position. This position information is then used to assist the user equipment in connecting to the non-terrestrial network entities providing non-terrestrial network cells. Should the user equipment 40 determine either from an implicit or explicit indication from the surrogate nodeB 10 or by deducing from its own measurements that the user equipment 40 is greater than a threshold distance from the surrogate nodeB 10, then the user equipment 40 may disregard the positioning information provided by the surrogate nodeB 10 and instead may determine its own position itself.

Typically, in some example embodiments, the user equipment 40 also reads the ephemeris information about the neighbour constellation satellites provided to the user equipment 40 by the surrogate nodeB 10. That is to say, the non-terrestrial network cell information harvested by the surrogate nodeB 10 and transmitted to the user equipment 40 may be used by the user equipment 40 to optimize its search parameters for a new non-terrestrial network cell. This is particularly useful where there is sparse satellite coverage (where there are few satellites in orbit). The ephemeris information broadcast by the surrogate nodeB 10 may indicate to the user equipment 40 the amount of time until a new satellite is within reachable range. Also, the surrogate nodeB 10 may indicate an age or a time elapsed since the ephemeris information was obtained which allows the user equipment 40 to dynamically update that information to assist in connecting to a new non-terrestrial network cell. The user equipment 40 then utilises this information to connect at the appropriate time with an appropriate non-terrestrial network entity providing a non-terrestrial network cell other than the surrogate nodeB 10.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An apparatus, comprising:
means for receiving configured to receive non-terrestrial network connection assistance information related to non-terrestrial network entities providing non-terrestrial network cells providing coverage to said apparatus; and
means for transmitting configured to transmit at least said non-terrestrial network connection assistance information to user equipment within transmission range of said apparatus.

2. The apparatus of claim 1, wherein said non-terrestrial network connection assistance information comprises at least one of: an indication of a geographical location of said apparatus and non-terrestrial network entity information; and preferably wherein said non-terrestrial network entity information comprises at least one of an indication of radio characteristics, a doppler shift, a transmission round-trip time, ephemeris information, a position, a trajectory and a velocity of said non-terrestrial network entities and preferably wherein said radio characteristics comprise at least one of a physical cell identity, a radio frequency and system reference timing of said non-terrestrial network cells.

3. The apparatus of claim 1 or 2, wherein said means for transmitting is configured to transmit said non-terrestrial network connection assistance information with a transmission range which is less than that of a macro base station and wherein said transmission range is less than around 300 metres and preferably less than around 100 metres.

4. The apparatus of any preceding claim, wherein said means for transmitting is configured to perform at least one of:
establish a cell with reduced functionality compared to that of a macro base station and preferably wherein said apparatus lacks circuity configured to support backhaul communication with a core network;
provide an indication to said user equipment that said apparatus is unsuitable for supporting a radio resource control connected mode with said user equipment and preferably; and
provide an indication to said user equipment that said apparatus is solely configured to provide said non-terrestrial network connection assistance information.

5. The apparatus of any preceding claim, wherein said means for transmitting is configured to transmit at least one of:
master information block and only a subset of system information blocks used to convey said non-terrestrial network connection assistance information;
ephemeris information relating to said apparatus on an associated system information block;
position and velocity information relating to said apparatus on an associated system information block used for conveying ephemeris information of said non-terrestrial network entities; and
said non-terrestrial network connection assistance information on an associated system information block.

6. The apparatus of any preceding claim, wherein said apparatus comprises a distance estimator configured to estimate a distance of said user equipment from said apparatus based on transmissions received from said user equipment and preferably wherein said means for transmitting is configured to provide an indication to said user equipment that no non-terrestrial network connection assistance information is to be provided when said user equipment is estimated to be greater than a threshold distance from said apparatus.

7. A method, comprising:
receiving non-terrestrial network connection assistance information related to non-terrestrial network entities providing non-terrestrial network cells providing coverage to an apparatus; and
transmitting at least said non-terrestrial network connection assistance information to user equipment within transmission range of said apparatus.

8. An apparatus, comprising:
means for receiving configured to receive non-terrestrial network connection assistance information from a base station and to determine from said non-terrestrial network connection assistance information that said base station has reduced functionality compared to that of a fully 3GPP compliant base station.

9. The apparatus of claim 8, comprising:
means for transmitting configured to utilise said non-terrestrial network connection assistance information for connecting to a non-terrestrial network.

10. The apparatus of claim 9, wherein said non-terrestrial network connection assistance information comprises at least one of: an indication of a geographical location of said apparatus and non-terrestrial network entity information; and preferably wherein said non-terrestrial network entity information comprises at least one of an indication of radio characteristics, a doppler shift, a transmission round-trip time, ephemeris information, a position, a trajectory and a velocity of said non-terrestrial network entities and preferably wherein said radio characteristics comprise at least one of a physical cell identity, a radio frequency and system reference timing of said non-terrestrial network cells.

11. The apparatus of claim 9 or 10, wherein said non-terrestrial network connection assistance information includes a time indicator indicating an age of said non-terrestrial network connection assistance information and preferably wherein said means for receiving is configured to adjust said non-terrestrial network connection assistance information based on said time indicator.

12. The apparatus of any one of claims 9 to 11, wherein said means for receiving is configured perform at least one of:
validate said non-terrestrial network connection assistance information based on said distance of said user equipment from said base station;
determine that a cell established by said base station has reduced functionality compared to that of a macro base station;
determine that said base station is unconnected to a core network;
identify an indication that said base station is unsuitable for supporting a radio resource control connected mode with said user equipment; and
identify an indication that said base station is solely configured to provide said non-terrestrial network connection assistance information.

13. The apparatus of any one of claims 9 to 11, wherein said means for receiving is configured to perform at least one of:
identify that it should receive a master information block and only a subset of system information blocks used to convey said non-terrestrial network connection assistance information;
receive ephemeris information relating to said base station on an associated system information block;
receive position and velocity information relating to said base station on an associated system information block used form conveying ephemeris information of said non-terrestrial network entities; and
receive said non-terrestrial network connection assistance information on an associated system information block.

14. A method, comprising:
receiving non-terrestrial network connection assistance information from a base station and determining from said non-terrestrial network connection assistance information that said base station has reduced functionality compared to that of a fully 3GPP compliant base station.

15. A computer program which when executed by a processor on an apparatus is configured to control said apparatus to perform a method according to claims 7 or 14.
